# EUROPEAN PATENT APPLICATION

(11) **EP 1 839 793 A2**
(43) Date of publication of application: **03.10.2007**
(21) Application number: 07104866.4
(22) Date of filing: 26.03.2007
(51) Int. Cl.: B23H 7/10

(54) **Wire electrode supply device for wire-cut electric discharge machine**

(30) Priority: 30.03.2006 JP 2006094938
(71) Applicant: Fanuc Ltd, Minamitsuru-gun, Yamanashi 401-0597 (JP)
(72) Inventor: KITA, Yuki, Minamitsuru-gun Yamanashi 401-0511 (JP); TAKAYAMA, Yushi, Minamitsuru-gun Yamanashi 401-0511 (JP); TAMURA, Yoshiaki, Minamitsuru-gun Yamanashi 401-0511 (JP)
(74) Representative: Billington, Lawrence Emlyn

(57) **Abstract**

A wire electrode supply device capable of preventing slack and snapping of a wire electrode even using a heavy wire bobbin without using a wire electrode tension detector. A pulley (8) is provided between the wire bobbin (2) driven by a torque motor (3) and a brake roller (4). The wire electrode (1) unwinds from the wire bobbin (2), passes through the pulley (8), brake roller (4) and a workpiece work area, and is taken up by a wind-up roller (7a,7b). When the wire electrode traveling speed is changed from fast to slow, the pulley (8) descends to prevent the wire electrode from slackening between the wire bobbin (2) and the brake roller (4).
When the traveling speed is changed from slow to fast, the back tension from the torque motor (3) is reduced for a predetermined period of time, reducing tension on the wire electrode and preventing it from snapping. Also, the pulley descends, rotating the wire bobbin in the feeding direction and quickening tracking of the shift to fast feed speed, enabling snapping of the wire electrode to be prevented even when a heavy wire bobbin is used.

## Description

### BACKGROUND OF THE INVENTION

### 1. Field of the Invention

The present invention relates to a wire electrode supply device for a wire-cut electric discharge machine.

### 2. Description of Related Art

A wire electrode supply device for a wire-cut electric discharge machine comprises a wire bobbin that supplies the wire electrode, brake means, and wire winding means. The wire electrode supplied from the wire bobbin is braked by a brake roller of the brake means and passed through a work area where a workpiece is processed, after which the wire is taken up by a wind-up roller or other such wire winding means so that the wire electrode travels while tension is imparted to it. Voltage is then applied between the wire electrode and the workpiece so as to create a discharge and carry out machining.

In the case of a heavy wire electrode, the wire bobbin of the wire electrode supply device also becomes heavy and therefore a DC motor whose speed can be controlled is used for the motor that drives the wire bobbin. By controlling the speed of rotation of the wire bobbin the tension on the wire electrode can be kept constant. For example, when the wire feed speed is changed from a given high speed (i.e. "fast") to a given low speed (i.e. "slow"), the heavy wire bobbin, which is rotating at high speed, does not immediately switch to the slow rotation speed due to inertia. As a result, the wire slackens and the tension changes, with the possibility that the wire electrode shifts from a predetermined travel position. To prevent this, the DC motor is instructed to revolve in a direction that rewinds the wire so as to take up slack in the wire. By contrast, when the wire feed speed is changed from slow to fast, the large inertia of the heavy wire bobbin does not track the change in the speed of rotation but lags it instead, and there is a possibility that an excessive load is placed on the wire electrode due to the difference between the winding speed of the wire winding means and the supply speed from the wire bobbin and the wire electrode snaps. In order to prevent this, the DC motor is instructed to rotate in a direction that feeds the wire forward, thus increasing the speed of rotation of the wire bobbin and preventing the tension on the wire from becoming excessive.

In addition, as a method of maintaining a constant wire tension, providing tension absorption rollers that displace with fluctuations in the tension of the wire where the wire is unwound from a wire supply reel and controlling the speed of a variable speed motor that drives the wire supply reel according to signals from a roller detector that detects the displacement of the tension absorption rollers so as to maintain the tension absorption rollers at predetermined positions is known (JP 61-54420U)

In addition, supplying wire electrode from a wire bobbin through a pulley to the working part of the machine and controlling the speed of the motor that drives the wire bobbin according to signals from a position detection unit that detects the position of the pulley is also widely known (JP 6-335826A).

Further, providing a wire electrode tension control mechanism that imparts tension to the wire electrode unwound from the wire supply bobbin by a similar pulley, detects the position of the pulley and controls the wire electrode unwind speed according to the detected position, and further, in order to make it possible to change the tension on the wire electrode, imparting torque to the wire electrode by a torque motor after the wire electrode passes through the wire electrode tension control mechanism and controlling the tension on the wire electrode according to the size of the torque output from the torque motor, is also known (JP 61-260933A).

Each of the above-described examples of the conventional art keeps the tension on the wire electrode constant by controlling the speed of the motor that drives the wire bobbin.

In addition, since slack in the wire electrode is prevented and the wire electrode does not shift from the wire travel position provided that the tension on the wire electrode is kept constant, a torque motor is sometimes used for the drive motor that rotates the wire bobbin. By applying a constant torque to the wire bobbin using the torque motor, a constant tension can be applied to the wire electrode. For example, in JP 61-121831A an invention is described in which the wire bobbin is driven by a torque motor, the amount of decrease in the amount of wire electrode wound around the wire bobbin is monitored by an optical sensor, and the torque of the torque motor is reduced by applying torque to the wire bobbin in the reverse direction of the direction of rotation of the wire bobbin in response to detection signals from the optical sensor so as to keep the tension on the wire electrode constant. Since a constant tension is maintained on the wire electrode by the output torque of the motor there is no need to detect fluctuations in the tension, and therefore this arrangement has the advantage that there is no need to provide a tension detector as in the other conventional example described above, in which the tension on the wire electrode is kept constant by controlling the speed of the motor that drives the wire bobbin.

In addition, as an example of the use of a torque motor on the wire electrode supply device for a wire-cut electric discharge machine, JP 57-178619A is known. What is described in JP 57-178619A is detecting the position of a pulley that is moved vertically by the difference between a wire feed speed generated by a wire feed motor of a wire feed mechanism and a wire winding speed generated by a wire wind-up roller and controlling the speed of the wire feed motor in response to the detected position of the pulley, with a torque motor used to maintain the position of the pulley.

However, with the conventional method as described above of controlling the speed of the motor that drives the wire bobbin in order to maintain a constant tension on the wire electrode, a detector for detecting the tension on the wire electrode is required.

In addition, if a torque motor is used to drive the wire bobbin, a constant tension is applied to the wire electrode by the output torque of the torque motor, and therefore there is no need for detection of fluctuation in the tension and a simple structure will suffice. However, a problem with the use of a torque motor to drive the wire bobbin is that it is limited to those cases in which the mass of the wire bobbin is small. If the wire bobbin is a heavy one, slack in or the snapping of the wire electrode due to the inertia of the heavy wire bobbin cannot be prevented by the back tension of the torque motor alone.

Specifically, when the travel speed of the wire electrode is changed from slow to fast, due to its inertia the heavy wire bobbin remains at slow without switching immediately to fast, which increases the tension on the wire electrode and could cause it to snap. Moreover, when the travel speed of the wire electrode is changed from fast to slow, again due to its inertia the heavy wire bobbin remains at fast without switching immediately to slow, which causes the wire electrode to slacken and the travel position of the wire electrode to shift, and could cause the wire electrode to slip off the guide rollers altogether.

### SUMMARY OF THE INVENTION

The present invention provides a wire electrode supply device for a wire-cut electric discharge machine that does not require a wire electrode tension detector, and which can prevent slack from occurring in the wire electrode as well as the snapping of the wire electrode even with the use of a heavy wire bobbin and maintain a constant tension on the wire electrode.

A wire electrode supply device of the present invention supplies a wire electrode from a wire bobbin to a machining region of a wire-cut electric discharge machine. The wire electrode supply device comprises: a wire winding roller for winding the wire electrode; a brake roller for braking the wire electrode, the wire winding roller and the brake roller being arranged with the machining region in between; a torque motor operatively connected to the wire bobbin, for applying back tension to the wire electrode fed from the wire bobbin; a pulley arranged between the wire bobbin and the brake roller movably to ascend/descend by gravity and wire tension, such that the wire electrode fed from the wire bobbin travels to the brake roller through the pulley; and a controller for reducing the back tension applied by the torque motor for a predetermined period of time when a winding speed of the wire electrode by the wire winding roller is changed from low to high.

The wire electrode supply device may further comprise a spring for exerting an elastic force to the pulley at an end of a stroke of ascending/descending motion thereof.

The wire electrode supply device may further comprise a spring that expands and contracts with ascending/descending motion of the pulley.

The wire electrode supply device of the present invention does not require a wire electrode tension detector, is of simple construction, and can prevent slack in as well as snapping of the wire electrode even with the use of a heavy wire bobbin and prevent the wire electrode from shifting from its predetermined travel position. Moreover, the wire electrode supply device of the present invention can prevent snapping and slackening of the wire electrode when a torque motor is used and a heavy wire bobbin is used.

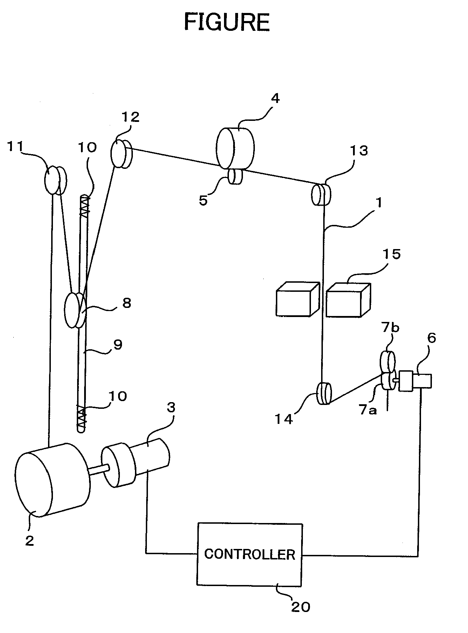

### BRIEF DESCRIPTION OF THE DRAWING

FIGURE is a schematic diagram showing an embodiment of the present invention.

### DETAILED DESCRIPTION

Referring to FIGURE, a wire bobbin 2 on which wire electrode 1 is wound is driven by a torque motor 3. The wire electrode 1 unwound from the wire bobbin 2 passes through a roller 11, around a pulley 8, around a roller 12, between a brake roller 4 and a press roller 5, and further, passes around a roller 13, through a work area in which a workpiece 15 is worked, around a roller 14 and between wire wind-up rollers 7a, 7b driven by a wire wind-up motor 6 so as to be wound up by wire wind-up rollers 7a, 7b. The wire wind-up motor 6, the torque motor 3 and a brake apparatus, not shown, that drives the brake roller 4 are connected to and controlled by a controller 20 that controls the wire-cut electric discharge machine.

The pulley 8 ascends and descends along guide means 9. Springs 10 are provided at the stroke ends of both the ascending and descending strokes of the pulley 8. The springs 10 function as dampers that absorb the impact when the pulley 8 reaches the end of its stroke and also impart to the pulley 8 a repulsive force.

The wire wind-up motor 6 drive causes the wire electrode 1 to be taken up by the wire wind-up rollers 7a, 7b, the wire electrode 1 is braked by the brake roller, the wire electrode 1 is given a predetermined tension in the electric discharge work area in which the workpiece 15 is worked by the wire electrode 1, and the wire electrode 1 is fed forward and travels. A voltage is applied across the wire electrode 1 and the workpiece 15 and electric discharge machining is carried out.

In addition, the pulley 8 is disposed between the wire bobbin 2 and the brake roller 4 and ascends and descends along the guide means 9 by gravity and the tension on the wire electrode 1. In the present embodiment, when wire feed is stopped or when the wire feed speed is constant, the back-tension of the torque motor 3 that drives the wire bobbin 2 holds the pulley 8 against the spring 10 at the top end of the permissible stroke. Specifically, the pulley 8 is maintained in a state in which the force exerted on the pulley 8 by the spring 10, the weight of the pulley 8 and the tension on the wire electrode 1 due to the back tension exerted by the torque motor 3 are evenly balanced.

When the controller 20 changes the speed of the wire wind-up motor 6, so that the wire electrode traveling speed changes from a high speed to a low speed, the wire bobbin 2 rotates by inertia and cannot immediately track the change in travel speed of the wire electrode. Particularly in the case of a heavy wire bobbin 2, the large inertia causes a lag in the tracking of the change in speed. As a result, the wire electrode 1 goes slack between the brake roller 4 and the wire bobbin 2 and the tension on the wire electrode 1 drops. The drop in tension causes the pulley 8 to descend, absorbing the slack in the wire electrode 1 and preventing slackening thereof, so as to prevent the wire electrode 1 from shifting from its predetermined travel position.

Conversely, when the wire electrode traveling speed is changed from a low speed to a high speed, due to inertia the rotation of the wire bobbin 2 lags in tracking the change in speed. As a result, the tension on the wire electrode 1 between the brake roller 4 and the wire bobbin 2 increases and there is a risk that the wire electrode might snap. To cope with this, according to the present embodiment, when the controller 20 outputs an instruction to the wire wind-up motor 6 to switch from a low speed to a high speed, simultaneously the back tension of the torque motor 3 is reduced for a predetermined period of time. When the back tension of the torque motor 3 is reduced the tension on the wire electrode 1 between the torque motor 3 and the brake roller 4 drops, preventing the wire electrode 1 from breaking. Moreover, since the tension on the wire electrode 1 drops, the balance with gravity (at first together with the repulsive force of the spring) breaks down and the pulley 8 descends. The wire electrode 1 is pulled by the pulley 8 as the pulley 8 descends, acting on the wire bobbin 2 in the direction of feeding the wire electrode 1 and preventing the wire bobbin 2 from lagging the feed speed of the wire electrode 1. In other words, the wire electrode 1 is prevented from being exposed to a large load, preventing snapping of the wire electrode 1. However, as one method of reducing the back tension, the back tension may be released.

When, as described above, the wire electrode 1 traveling speed is changed from fast to slow, the heavy wire bobbin 2 due to its own inertia continues to rotate at high speed in response to the fast traveling speed and the wire electrode thus slackens. However, the slack is automatically eliminated by the descent of the pulley 8 and the wire does not shift from is predetermined travel position. Moreover, when changing from slow to fast, the back tension of the wire bobbin 2 is reduced and gravity (at first together with the repulsive force of the spring) forces the pulley 8 to descend, pulling the wire electrode 1 and assisting the rotation of the wire bobbin 2 in the direction of feeding the wire electrode 1, thus enabling prompt response to fast traveling.

In the embodiment described above the springs 10 are provided at the stroke ends of the pulley 8 as stroke-end damping members. Alternatively, the springs may be mounted on both ends of the pulley 8 itself with their remaining end free, such that, when the pulley 8 approaches the end of its stroke, the free end of the spring contacts a spring seat provided at the stroke end and the spring is compressed, thus functioning as a damper.

In addition, one end of the spring may be mounted on the pulley 8 and the other end mounted at one end of the stroke (this type of spring may be provided either on both ends of the pulley 8 or on only one end). When traveling of the wire electrode 1 stops or the wire electrode 1 moves at a constant speed, the pulley 8 is held at a position at which the weight of the pulley 8 combined with either the tensile force or the repulsive force of the spring on the one hand and the tension on the wire electrode 1 on the other are evenly balanced. When the wire electrode 1 traveling speed is changed from fast to slow and the tension on the wire electrode drops, the pulley 8 descends and prevents the wire electrode 1 from slackening. When the traveling speed is changed from slow to fast, the back tension exerted by the torque motor 3 is simultaneously reduced for a predetermined period of time, decreasing the tension on the wire electrode, causing the pulley 8 to descend by gravity and the force of the spring so as to pull the wire electrode 1 and drive the wire bobbin 2 in the direction in which the wire electrode is being fed out.

## Claims

1. A wire electrode supply device for supplying a wire electrode from a wire bobbin to a machining region of a wire-cut electric discharge machine, said wire electrode supply device comprising:
a wire winding roller for winding the wire electrode;
a brake roller for braking the wire electrode, said wire winding roller and said brake roller being arranged with the machining region in between;
a torque motor operatively connected to the wire bobbin, for applying back tension to the wire electrode fed from the wire bobbin;
a pulley arranged between the wire bobbin and said brake roller movably to ascend/descend by gravity and wire tension, such that the wire electrode fed from the wire bobbin travels to said brake roller through said pulley; and
a controller for reducing the back tension applied by said torque motor for a predetermined period of time when a winding speed of the wire electrode by said wire winding roller is changed from low to high.

2. A wire electrode supply device according to claim 1, further comprising a spring for exerting an elastic force to said pulley at an end of a stroke of ascending/descending motion thereof.

3. A wire electrode supply device according to claim 1, further comprising a spring that expands and contracts with ascending/descending motion of said pulley.
